# EUROPEAN PATENT APPLICATION

(11) **EP 0 601 368 A1**
(43) Date of publication of application: **15.06.1994**
(21) Application number: 93118713.2
(22) Date of filing: 22.11.1993
(51) Int. Cl.: B22F 3/22, B22F 5/00

(54) **Method of manufacturing a part of a spindle motor**

(30) Priority: 07.12.1992 JP 351260/92
(71) Applicant: MINEBEA CO.,LTD., Kitasaku-gun Nagano-ken (JP)
(72) Inventor: Ichimura, Hirotaka, c/o Karuizawa F. M. Co., Ltd., Kitasaku-gun, Nagano-ken (JP)
(74) Representative: Patentanwälte Schaad, Balass & Partner AG

(57) **Abstract**

A molten metal powder is injected into a mold cavity so shaped as to make a hub and a shaft together as a single product for use as a part of a spindle motor.

## Description

### BACKGROUND OF THE INVENTION

### 1. Field of the Invention:

This invention relates to a method of manufacturing a part of a spindle motor which is used for driving a hard disk in an office automation apparatus, such as a personal computer, or word processor.

### 2. Description of the Prior Art:

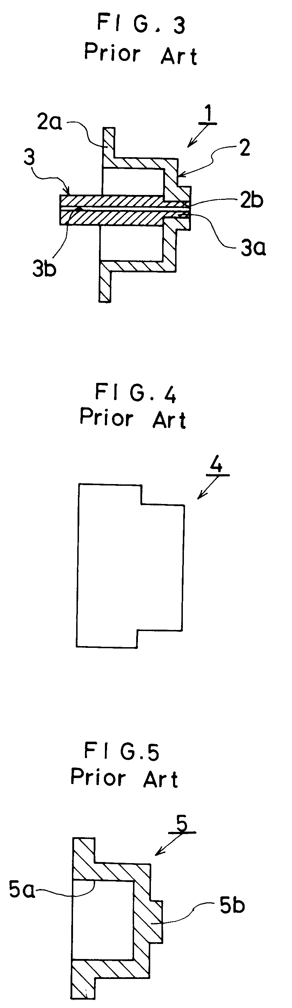

The part of a spindle motor to which the method of this invention is applicable is generally shown at 1 in FIGURE 3 of the accompanying drawings. The part 1 comprises a cup-shaped hub 2 having a radially outwardly extending flange 2a and a central bottom hole 2b, and a shaft 3 extending into the hub 2 and having a diametrically reduced end portion 3a fitted in its hole 2b. The shaft 3 has an axial bore 3b, though there is also a shaft not having any such bore.

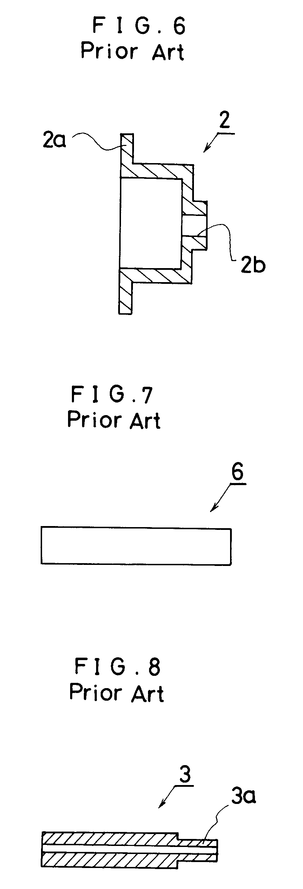

A known process for manufacturing the part 1 is shown in FIGURES 4 to 8. A metal block 4 shaped as shown in FIGURE 4 is cut in its central and outer peripheral portions to form a blank 5 having a concavity 5a and a projection 5b, as shown in FIGURE 5. A hole 2b is made in the center of the projection 5b so as to be connected with the concavity 5a, whereby a hub 2 is made as shown in FIGURE 6. The hub 2 is of the shape shown in FIGURE 3.

A bar 6 as shown in FIGURE 7 is cut in its outer periphery, reduced in diameter in one end portion 3a thereof, and formed with an axial bore 3b to make a shaft 3, as shown in FIGURE 8. The shaft 3 is of the shape shown in FIGURE 3.

The hub 2 and the shaft 3 are fitted together. The diametrically reduced end portion 3a of the shaft 3 is coated on its outer peripheral surface with an adhesive, inserted into the hole 2b of the hub 2, and left to stand for an appropriate length of time, whereby the hub 2 and the shaft 3 are held firmly together to give a part 1 as shown in FIGURE 8.

The known process has, however, a number of drawbacks, as is obvious from the foregoing description, and as will be pointed out. A great deal of machining work is required for making the hub and the shaft and calls for an undesirably long time. A high level of skill is required to ensure that a large number of products be of uniform quality. The machining work unavoidably creates a large amount of waste material.

### SUMMARY OF THE INVENTION

Under these circumstances, it is an object of this invention to provide an improved method which can manufacture a part of a spindle motor easily and efficiently without bringing about any substantial waste of material, while ensuring the uniform quality of a large number of products.

This object is attained by a method which comprises injecting a metal powder into a mold cavity so shaped as to make a part of a spindle motor as a single product consisting of a hub and a shaft united together.

The method of this invention can manufacture a part of a spindle motor consisting of a hub and a shaft as a single product by injection molding. If the method of this invention is employed, it is no longer necessary to prepare a hub and a shaft separately and join them together. The method can, therefore, manufacture the part in a by far less time than the known process involving a great deal of machining work can. It requires only, say, one-fifth of the time required by the known process to manufacture a part which is substantially identical to the product of the known process. The method of this invention does not bring about any substantial waste of material, insofar as it hardly involves any machining work. Moreover, it ensures the uniform quality of a large number of parts which it manufactures.

### BRIEF DESCRIPTION OF THE DRAWINGS

FIGURE 1 is a sectional view of a mold which can be employed for carrying out the method of this invention;
FIGURE 2 is a sectional view of a part of a spindle motor as made by the mold shown in FIGURE 1;
FIGURE 3 is a sectional view of a part of a spindle motor as made by a known process;
FIGURE 4 is a side elevational view of a block used to make a hub in the part shown in FIGURE 3;
FIGURE 5 is a sectional view of a blank formed from the block shown in FIGURE 4;
FIGURE 6 is a sectional view of the hub formed from the blank shown in FIGURE 5;
FIGURE 7 is a side elevational view of a bar used to make a shaft in the part shown in FIGURE 3;
FIGURE 8 is a sectional view of the shaft formed from the bar shown in FIGURE 7.

### DETAILED DESCRIPTION OF THE INVENTION

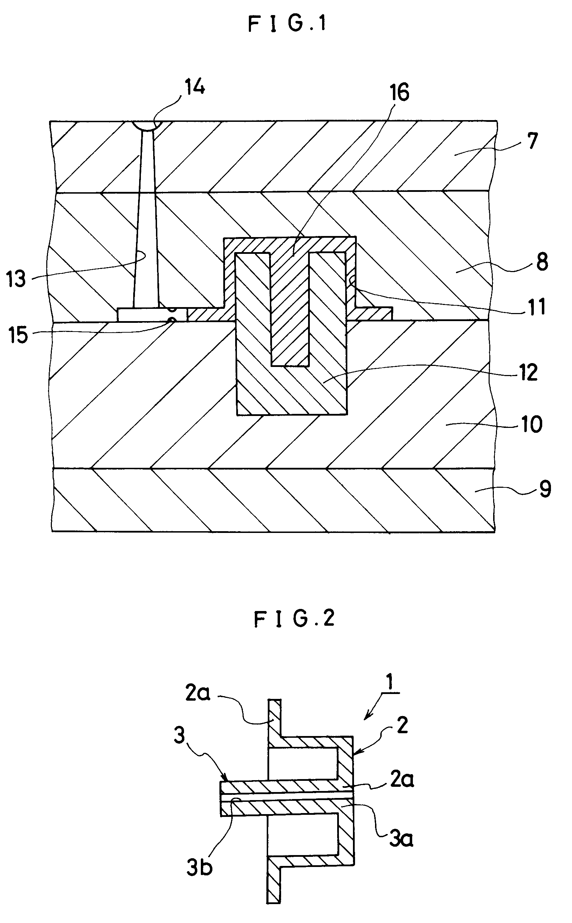

The method of this invention is employed for manufacturing a part of a spindle motor which consists of a hub and a shaft, as shown in FIGURE 2. It is substantially identical to the product of the known process which is shown in FIGURE 3. Like numerals are, therefore, used to denote like parts throughout all of the drawing figures.

Description will now be made of a method embodying this invention with reference to FIGURE 1 which shows by way of example a mold which can be employed for carrying out the method. The mold comprises a stationary mold member 8 attached to a plate 7, and a movable mold member 10 attached to a plate 9. The movable mold member 10, as well as the plate 9, is vertically movable by an appropriate mechanism not shown between its raised position in which the mold is closed to define a cavity 11, as shown in FIGURE 1, and its lowered position in which the mold is opened.

The mold is provided with a core 12 which defines the cavity 11 with the mold members 8 and 10, so that the cavity 11 may be so shaped as to make a molded product consisting of a hub and a shaft united together. The mold has a sprue 13 extending through the plate 7 and the stationary mold member 8, and having an upper end 14 for nozzle connection. The mold also has a gate 15 located between the cavity 11 and the sprue 13 for preventing a metal powder from flowing back from the cavity 11.

Referring to the method, a nozzle not shown is connected to the upper end 14 of the sprue 13 when the mold is in its closed position as shown in FIGURE 1, and a metal powder is injected into the cavity 11 through the nozzle and the sprue 13. The metal powder contains e.g. a synthetic resin as a solidifying agent, and upon solidification of the solidifying agent as a result of cooling, the movable mold member 10 is lowered with the plate 9 to open the mold. Then, the core 12 is removed from a molded product 16, and the product 16 is ejected from the mold by a push rod not shown.

The product 16 has substantially a final shape, though a minor machine finish may be required. After a grinding finish has, for example, been given to it, an axial bore 3b is made through the shaft portion of the product 16, whereby there is obtained a part 1 as shown in FIGURE 2. The part 1 consists of a hub 2 having a radially outwardly projecting flange 2a, and a shaft 3 having the axial bore 3b, extending centrally through the hub 2 and having an inner end connected to the center of the bottom wall of the hub 2.

The invention has been described with reference to a preferred embodiment thereof. It is, therefore, to be understood that variations or modifications may be made by anybody of ordinary skill in the art without departing from the scope of this invention which is defined by the appended claims.

## Claims

1. In a method of manufacturing a part of a spindle motor which consists of a cup-shaped hub having a flange projecting radially outwardly from its open end, and a shaft extending centrally through said hub, and having an inner end joined to the center of the closed end of said hub, the improvement which comprises injecting a molten metal powder into a mold cavity so shaped as to make said hub and said shaft together as a single product.

2. A method as set forth in claim 1, wherein said cavity is defined by a stationary mold member, a movable mold member and a core fitted removably between said mold members.

3. A method as set forth in claim 1 or 2, further including making an axial bore through said shaft and said closed end of said hub after said product is ejected from said cavity.
